# EUROPEAN PATENT APPLICATION

(11) **EP 4 250 423 A1**
(43) Date of publication of application: **27.09.2023**
(21) Application number: 23163417.1
(22) Date of filing: 22.03.2023
(51) Int. Cl.: H01M 10/0562, H01M 10/052, H01M 10/0585

(54) **ALL SOLID SECONDARY BATTERY AND METHOD OF MANUFACTURING THE SAME**

(30) Priority: 22.03.2022 KR 20220035539
(71) Applicant: Samsung SDI Co., Ltd., Yongin-si, Gyeonggi-do 17084 (KR)
(72) Inventor: Lee, Minsuk, Yongin-si, Gyeonggi-do 17084 (KR); Ryu, Younggyoon, Yongin-si, Gyeonggi-do17084 (KR); Ryu, Suyeol, Yongin-si, Gyeonggi-do 17084 (KR); Park, Jihyoung, Yongin-si, Gyeonggi-do 17084 (KR); Yoon, Jaegu, Yongin-si, Gyeonggi-do 17084 (KR); Shin, Isaac, Yongin-si, Gyeonggi-do 17084 (KR)
(74) Representative: Gulde & Partner

(57) **Abstract**

An all solid secondary battery and a method of manufacturing the same, the all solid secondary battery includes an electrode assembly including a cathode layer, an anode layer, a solid electrolyte layer between the anode layer and the cathode layer, and a porous multilayer member on one surface or opposite surfaces of the electrode assembly, wherein the porous multilayer member includes a porous cushioning layer, and a porous protecting layer on one surface or opposite surfaces of the porous cushioning layer.

## Description

### BACKGROUND

### 1. Field

Embodiments relate to an all solid secondary battery and a method of manufacturing an all solid secondary battery.

### 2. Description of the Related Art

In accordance with recent industrial demands, batteries having increased energy density and high safety have been actively developed. For example, lithium-ion batteries have been put to practical use in the automotive industry as well as in information-related equipment and communication equipment. In the automotive industry, safety is important due to the relation to life.

### SUMMARY

The invention is defined by the appended claims. Specifically, there is provided an all solid secondary battery as defined in claim 1 including an electrode assembly including a cathode layer, an anode layer, and a solid electrolyte layer between the anode layer and the cathode layer; and a porous multilayer member on one surface or opposite surfaces of the electrode assembly, wherein the porous multilayer member includes a porous cushioning layer, and a porous protecting layer on one surface or opposite surfaces of the porous cushioning layer.

According to another aspect of the present invention, there is provided a method of manufacturing an all solid secondary battery, the method including providing an electrode assembly including a cathode layer, an anode layer, and a solid electrolyte layer between the anode layer and the cathode layer, and placing a porous multilayer member on one surface or facing surfaces of the electrode assembly, wherein the porous multilayer member includes a porous cushioning layer, and a porous protecting layer on one surface or facing surfaces of the porous cushioning layer.

### BRIEF DESCRIPTION OF THE DRAWINGS

Features will be apparent to those of skill in the art by describing in detail exemplary embodiments with reference to the attached drawings in which:
FIG. 1 is a cross-sectional view of an all solid secondary battery according to an embodiment;
FIG. 2 is a cross-sectional view of a bi-cell all solid secondary battery according to an embodiment;
FIG. 3 is a cross-sectional view of an all solid secondary battery according to an embodiment;
FIG. 4 is a cross-sectional view of a bi-cell all solid secondary battery according to an embodiment;
FIG. 5A is a cross-sectional view of a porous multilayer member according to an embodiment;
FIG. 5B is a cross-sectional view of a porous multilayer member according to an embodiment;
FIG. 6 is a cross-sectional view of an all solid secondary battery structure according to an embodiment; and
FIG. 7 is a cross-sectional view of an all solid secondary battery structure according to an embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present. Like reference numerals refer to like elements throughout.

In the case of an all solid secondary battery, an electrolyte is solid. Accordingly, if the contact between a cathode layer and a solid electrolyte layer and between an anode layer and a solid electrolyte layer were not sufficiently maintained during charging and discharging, the resistance within the battery could increase, making it difficult to exhibit excellent battery characteristics.

The change in the volume of the all solid secondary battery may be accompanied by the change in the volume of the cathode layer and/or the anode layer during the charging/discharging process of the all solid secondary battery, and there may be a need to apply a constant pressure to the all solid secondary battery to maintain the contact between the anode layer and the solid electrolyte layer while tolerating the change in the volume of the all solid secondary battery. In order to absorb the volume change of the all solid secondary battery, an elastic member may be on one surface of the all solid secondary battery. In this case, however, an air pocket could be formed between the elastic member and the all solid secondary battery, which may lead to the applying of a non-uniform pressure on the all solid secondary battery. Therefore, due to uneven pressure applied to the all solid secondary battery during the charging and discharging process of the all solid secondary battery, defects could occur in the all solid secondary battery. Due to these defects, cracks could occur and grow in the all solid secondary battery. As lithium grows through these cracks, a short circuit may occur between the cathode layer and the anode layer, or as these cracks occur more, the internal resistance of the all solid secondary battery is increased, and as a result, the cycle characteristics of the all solid secondary battery deteriorate.

In addition, the elastic member may have adhesiveness, defects may occur due to unintentional binding of the elastic member and the all solid secondary battery in the process of arranging the elastic member in the all solid secondary battery, and the manufacturing of the all solid secondary battery may not be performed rapidly and efficiently.

An all solid secondary battery according to the present invention has a new configuration. A short circuit thereof during charging and discharging may be prevented, and cyclic characteristics thereof may be improved.

An all solid secondary battery according to the present invention may be manufactured quickly and efficiently due to the inclusion of a new configuration, so that the easiness of the manufacturing process may be improved.

Although the terms "first," "second," etc., may be used herein to describe various elements, components, regions, and/or layers, these elements, components, regions, and/or layers should not be limited by these terms. These terms are used only to distinguish one component from another, not for purposes of limitation or to imply or require sequential inclusion. In the present specification and drawings, components having substantially the same functional features are denoted by the same reference numerals, and redundant descriptions thereof will be omitted.

The term "average particle size" used herein refers to a value of median particle size (D50) which corresponding to 50% of particles accumulated from smaller particles according to converted volume, which is measured by using a laser scattering particle size distribution meter (e.g., Horiba LA-920). Alternatively, the "average particle diameter" used herein is measured manually or by software from a scanning electron microscope image and/or transmission electron microscope image of a cross section of an all solid secondary battery, and refers to an arithmetic mean of the particle diameter of a plurality of particles shown in the image.

Hereinafter, all solid secondary batteries according to embodiments will be described in more detail.

### [All solid secondary battery]

An all solid secondary battery includes an electrode assembly including a cathode layer, an anode layer, and a solid electrolyte layer between the cathode layer and the anode layer, and a porous multilayer member on one surface or facing (e.g., both) surfaces of the electrode assembly. The porous multilayer member includes a porous cushioning layer and a porous protecting layer on one surface or facing surfaces of the porous cushioning layer. When the all solid secondary battery includes such a porous multilayer member, defects occurring during charging and discharging of the all solid secondary battery may be suppressed, and cracks inside the all solid secondary battery caused by these defects may be suppressed. As a result, the short circuit of the all solid secondary battery may be suppressed and the lifespan characteristics thereof may be improved. In addition, the easiness of the manufacturing process of the all solid secondary battery may be improved.

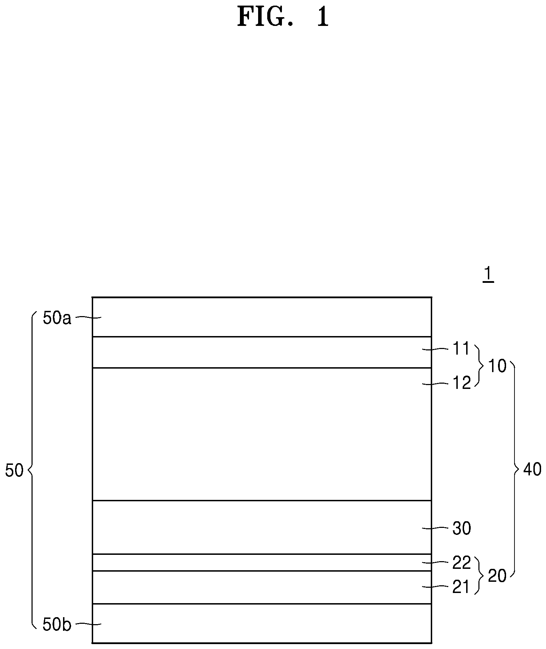

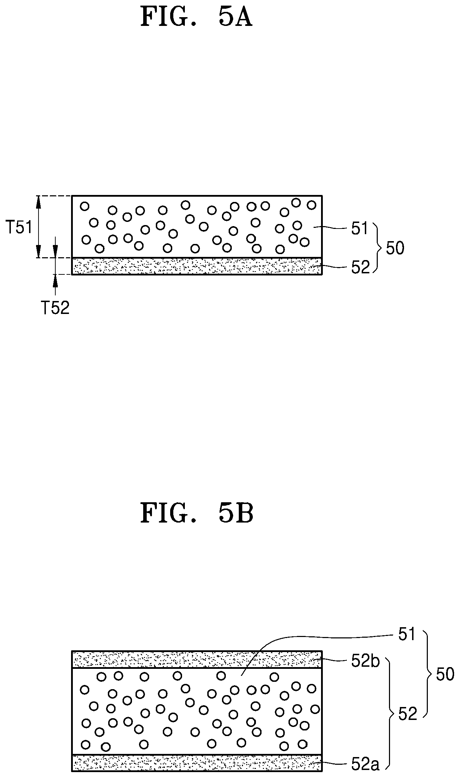

Referring to FIGS. 1 to 4, an all solid secondary battery 1 includes an electrode assembly 40 including a cathode layer 10, an anode layer 20, and a solid electrolyte layer 30 between the cathode layer 10 and the anode layer 20. The all solid secondary battery 1 further includes a porous multilayer member 50, 50a, and 50b on one surface or facing (e.g., opposite) surfaces of the electrode assembly 40. Referring to FIGS. 5A and 5B, the porous multilayer member 50 includes a porous cushioning layer 51 and a porous protecting layer 52, 52a, and 52b on one surface or facing surfaces of the porous cushioning layer 51.

### [Porous multilayer member]

### [Porous multilayer member: porous cushioning layer]

Referring to FIGS. 5A and 5B, the porous multilayer member 50 includes a porous cushioning layer 51.

The porous multilayer member 50 has porosity, and the formation of an air pocket between the electrode assembly 40 and the porous multilayer member 50 may be prevented. In addition, a change in volume of the electrode assembly 40 may be more effectively absorbed. The porous multilayer member 50 may apply uniform pressure to one or both sides of the electrode assembly 40. Therefore, during charging and discharging of the all solid secondary battery 1, non-uniform precipitation of lithium metal in the anode layer 20 may be prevented. As a result, a short circuit of the all solid secondary battery 1 may be prevented and the lifespan characteristics of the all solid secondary battery 1 may be improved.

The porous cushioning layer 51 provides a cushioning function to the porous multilayer member 50. The porous cushioning layer 51 may provide stress relaxation and restoring force. The porous cushioning layer 51 may effectively absorb the change in the volume of the electrode assembly 40 and may apply a constant level of pressure to the all solid secondary battery 1.

Referring to FIGS. 1 to 4, the porous multilayer member 50 is on (e.g., directly on) the anode layer 20 of the electrode assembly 40. The porous multilayer member 50 may be only on (e.g., directly on) the anode layer 20 and not on the cathode layer 10. During charging and discharging of the all solid secondary battery 1, the change in the volume of the anode layer 20 may be relatively greater than those of the cathode layer 10 and the solid electrolyte layer 30. Accordingly, the porous multilayer member 50 may be adjacent to the anode layer 20, and the change in the volume of the anode layer 20 may be absorbed effectively. In addition, the porous multilayer member 50 may apply a constant level of pressure to the anode layer 20, uniform precipitation of lithium metal, in the anode layer 20 may be induced. Therefore, the generation of defects in the all solid secondary battery 1 due to the non-uniform precipitation of lithium metal, may be effectively prevented.

Referring to FIGS. 5A and 5B, an elastic modulus of the porous cushioning layer 51 may be smaller than an elastic modulus of the porous protecting layer 52. The porous cushioning layer 51 may have a smaller elastic modulus than the porous protecting layer 52, and the porous cushioning layer 51 may absorb most of the change in the volume of the all solid secondary battery 1. Therefore, the porous multilayer member 50 may effectively absorb the change in the volume of the all solid secondary battery 1 and may apply a constant level of pressure to the all solid secondary battery 1. The elastic modulus of the porous cushioning layer 51 may be 0.001 GPa to 0.5 GPa, 0.01 GPa to 0.3 GPa, or 0.01 GPa to 0.1 GPa. The elastic modulus of the porous protecting layer 52 may be 0.1 GPa to 5 GPa, 0.3 GPa to 3 GPa, or 0.5 GPa to 1 GPa. The elastic modulus of the porous cushioning layer 51 may be 90% or less, 80% or less, 70% or less, 50% or less, 30% or less, 20% or less, or 10% or less of the elastic modulus of the porous protecting layer 52. The elastic modulus may be measured through a stress-strain test of a sample, specifically according to ASTM E2769-22.

Referring to FIGS. 5A and 5B, the thickness of the porous cushioning layer 51 may be greater than that of the porous protecting layer 52. The porous cushioning layer 51 may have a greater thickness than the porous protecting layer 52, and the porous cushioning layer 51 may absorb most of the change in the volume of the all solid secondary battery 1. Therefore, the porous multilayer member 50 may effectively absorb the change in the volume of the all solid secondary battery 1. The thickness T51 of the porous cushioning layer 51 may be 300 µm or less, 200 µm or less, 100 µm or less, 50 µm or less, 30 µm or less, or 20 µm or less. The thickness T51 of the porous cushioning layer may be between 1 µm and 300 µm, between 3 µm and 200 µm, between 5 µm and 100 µm, between 5 µm and 50 µm, between 5 µm and 30 µm, or between 5 µm and 20 µm. Alternatively, the thickness T51 of the porous cushioning layer 51 may be between 1 µm and 300 µm, between 3 µm and 250 µm, between 3 µm and 200 µm, between 5 µm and 200 µm, between 10 µm and 200 µm, between 10 µm and 150 µm, or between 10 µm and 100 µm.

The air permeability of the porous cushioning layer 51 may be 1,000 sec/100 cc or more, 5,000 sec/100 cc or more, or 10,000 sec/100 cc or more. The air permeability of the porous cushioning layer 51 may be 1,000 sec/100 cc to 50,000 sec/100cc, 5,000 sec/100 cc to 50,000 sec/100cc, or 10,000 sec/100 cc to 50,000 sec/100cc. Air permeability may be measured as a Gurley value. The Gurley value may be measured by a method according to JIS P8117.

The porosity of the porous cushioning layer 51 may be 5% to 95%, 10% to 90%, 20% to 80%, 30% to 70%, or 35% to 55%. When the porous cushioning layer 51 has a porosity in these ranges, the change in the volume of the electrode assembly 40 may be effectively absorbed. The porosity may be calculated from the volume and weight of the porous cushioning layer 51 and the density of the material constituting the porous cushioning layer 51. The porosity of the porous cushioning layer 51 may be measured by a liquid or gas adsorption method according to ASTM D-2873.

The size of the cells or pores included in the porous cushioning layer 51 may be 0.1 µm to 50 µm, 1 µm to 30 µm, 1 µm to 10 µm, or 0.1 µm to 5 µm. The size of cells or the size of pores may be an average cell size or an average pore size. When the porous cushioning layer 51 has such ranges of average cell sizes or average pore sizes, the change in the volume of the electrode assembly 40 may be effectively absorbed. The average pore size may be measured by a nitrogen adsorption method. The pore size may be calculated by software or manually from a scanning electron microscope image of a cross section of the porous cushioning layer 51. The porous cushioning layer 51 may have a single-layer structure or a multi-layer structure. The multi-layer structure may be a two-layer structure, a three-layer structure, or a four-layer structure.

The porous cushioning layer 51 may include a porous foam, a porous sponge, or a combination thereof. The porous cushioning layer 51 may include a porous foam sheet, a porous sponge sheet, or a combination thereof. The porous cushioning layer 51 may have such forms, and porosity and cushioning functions may be provided at the same time. The porous foam may include a closed cell, an open cell, or a combination thereof. The porous sponge may include a closed cell, an open cell, or a combination thereof. A closed cell refers to a closed pore, and may be a cell or pore that is not connected to the surrounding atmosphere. An open cell refers to an open pore, and may be a cell or pore that is connected to the surrounding atmosphere. The porous cushioning layer 51 may include a closed cell porous foam, an open cell porous foam, a closed cell porous sponge, an open cell porous sponge, or a combination thereof. The porous foam may include a closed cell and an open cell, at the same time. The porous sponge may include a closed cell and an open cell, at the same time.

The porous cushioning layer 51 may be formed as a self-adhesive layer. When the porous cushioning layer 51 has adhesiveness, the porous protecting layer 52 may be easily attached to on one surface or facing surfaces of the porous cushioning layer 51. Further, the porous protecting layer 52 may not be easily detached after being attached on the porous protecting layer 52 on the porous cushioning layer 51. The porous cushioning layer 51 may have viscoelasticity. In an implementation, a porous foam sheet and a porous sponge sheet may be an adhesiveness sheet.

The porous cushioning layer 51 may be formed of or include a polymer material, a rubber material, or a combination thereof. When the porous cushioning layer 51 includes a polymer material, a rubber material, or a combination thereof, the porous cushioning layer 51 may have stress relaxation and a restoring force. The polymer material may include a polyurethane polymer, a polyacryl polymer, a polystyrene polymer, a polyester polymer, a polyamide polymer, a polyolefin polymer, or a combination thereof. The polymer material may formed of an adhesive material. The rubber material may include natural rubber (NR), butadiene rubber (BR), nitrile rubber, silicone rubber, isoprene rubber (IR), styrene-butadiene rubber (SBR), isoprene-butadiene rubber, styrene-isoprene-butadiene rubber, acrylonitrile-butadiene rubber (NBR), ethylene-propylene-diene rubber, halogenated butyl rubber, halogenated isoprene rubber, halogenated isobutylene copolymer, chloroprene rubber (CR), butyl rubber (IIR), halogenated isobutylene-p-methylstyrene rubber, or a combination thereof. The polyurethane polymer may include polyester polyurethane, polyether polyurethane, or a combination thereof. The polyacryl polymer may include polyacrylate, polymethyl acrylate, polymethacrylate, polymethylmethacrylate, or a combination thereof. The polystyrene polymer may include a styrene-ethylene-butylene copolymer (SEB), a styrene-butadiene-styrene copolymer (SBS), a hydrogenated product of SBS (a styrene-ethylene-butylene-styrene copolymer (SEBS)), a styrene-isoprene-styrene copolymer (SIS), a hydrogenated product of SIS (a styrene-ethylene-propylene-styrene copolymer (SEPS)), a styrene-isobutylene-styrene copolymer (SIBS), a styrene-butadiene-styrene-butadiene (SBSB), a styrene-butadiene-styrene-butadiene-styrene (SBSBS), a polystyrene (PS), an acrylonitrile styrene copolymer (AS), an acrylonitrile butadiene styrene copolymer (ABS), or a combinations thereof. The polyester polymer may include polyethylene terephthalate, polybutylene terephthalate, or a combination thereof. The polyamide polymer may include polyamide 6, polyamide 11, polyamide 12, polyamide 66, polyamide 610, or a combination thereof. The polyolefin polymer may include a polyethylene, a polypropylene, an ethylene propylene copolymer, a propylene-1-hexene copolymer, a propylene-4-methyl-1-pentene copolymer, a propylene-1-butene copolymer, an ethylene-1-hexene copolymer, an ethylene-4-methyl-pentene copolymer, an ethylene-1-butene copolymer, a 1-butene-1-hexene copolymer, a 1-butene-4-methylpentene copolymer, an ethylene methacrylate copolymer, an ethylene methyl methacrylate copolymer, an ethylene ethyl methacrylate copolymer, an ethylene butyl methacrylate copolymer, an ethylene-methyl acrylate copolymer, an ethylene-ethyl acrylate copolymer, an ethylene-butyl acrylate copolymer, a propylene-methacrylate copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer (EVA), polyolefins of a propylene vinyl acetate copolymer, or a combination thereof.

### [Porous multilayer member: porous protecting layer]

Referring to FIGS. 5A and 5B, the porous multilayer member 50 includes the porous cushioning layer 51 and the porous protecting layer 52, 52a, and 52b on one surface or facing surfaces of the porous cushioning layer 51.

The porous protecting layer 52 may be on one surface or facing surfaces of the porous cushioning layer 51 to provide a more uniform surface to the porous multilayer member 50. The porous protecting layer 52 may provide protection against unnecessary contact or contamination of the porous cushioning layer 51 with or by the external environment. The porous protecting layer 52 may have porosity, and the formation of an air pocket between the porous multilayer member 50 and the electrode assembly 40 may be effectively prevented.

The porous protecting layer 52 may be a non-adhesive layer, i.e. may be formed of a non-adhesive material. When the porous protecting layer 52 does not have adhesiveness, the porous multilayer member 50 having the porous protecting layer 52 does not have adhesiveness. The porous multilayer member 50 may be easily wound together with the electrode assembly 40 or may be easily disposed on one surface or facing surfaces of the electrode assembly 40. The porous multilayer member 50 may be easily disposed continuously among a plurality of electrode assemblies 40. The easiness or efficiency of operation in the manufacturing process of the all solid secondary battery 1 may be significantly improved.

A thickness T52 of the porous protecting layer 52 may be 30 µm or less, 20 µm or less, or 10 µm or less. The thickness T52 of the porous protecting layer 52 may be 0.1 µm to 30 µm, 0.5 µm to 20 µm, or 1 µm to 10 µm. Alternatively, the thickness T52 of the porous protecting layer 52 may be, e.g., 0.1 µm to 100 µm, 0.5 µm to 100 µm, 1 µm to 100 µm, 1 µm to 50 µm, 1 µm to 30 µm, 1 µm to 20 µm, or 1 µm to 10 µm. The thickness T52 of the porous protecting layer 52 may be 90% or less, 70% or less, 50% or less, 30% or less, or 20% or less of the thickness T51 of the porous cushioning layer 51.

The air permeability of the porous protecting layer 52 may be 1,000 sec/100 cc or less, 500 sec/100 cc or less, or 200 sec/100 cc or less. The air permeability of the porous protecting layer 52 may be10 sec/100 cc to 1,000 sec/100 cc, 50 sec/100 cc to 500 sec/100 cc, or 100 sec/100 cc to 200 sec/100 cc. Air permeability may be measured as a Gurley value. The Gurley value may be measured by a method according to JIS P8117. When the porous protecting layer 52 has such ranges of air permeability, the formation of an air pocket between the porous multilayer member 50 and the electrode assembly 40 may be effectively prevented and the mechanical strength of the porous protecting layer 52 may be effectively maintained.

The porosity of the porous protecting layer 52 may be 5% to 95%, 10% to 90%, 20% to 80%, 30% to 70%, or 35% to 55%. When the porous protecting layer 52 has such ranges of porosity, the formation of an air pocket between the porous multilayer member 50 and the electrode assembly 40 may be effectively prevented and the durability of the porous multilayer member 50 may be effectively maintained. The porosity may be calculated from the volume and weight of the porous protecting layer 52 and the density of the material constituting the porous protecting layer 52. The porosity of the porous protecting layer 52 may be measured by a liquid or gas adsorption method according to ASTM D-2873.

The size of the pores included in the porous protecting layer 52 may be 0.01 µm to 20 µm, 0.01 µm to 10 µm, 0.01 µm to 1 µm, or 0.01 µm to 0.5 µm. The size of the pores may be an average pore size. When the porous protecting layer 52 has such ranges of average pore size, the formation of an air pocket between the porous multilayer member 50 and the electrode assembly 40 may be effectively prevented and the mechanical strength of the porous protecting layer 52 may be effectively maintained. The pore size may be measured by a nitrogen adsorption method. The size of the pores may be measured using the BET 6-point method by the nitrogen gas adsorption flow method, through a scanning electron microscope (SEM), a mercury porosimeter, a capillary flow porometer, or a porosimetry analyzer (Bell Japan Inc, Belsorp-II mini).

The porous protecting layer 52 may include a polyolefin polymer, a cellulose polymer, or a combination thereof.

The polyolefin polymer may be a homopolymer, a copolymer, or a combination thereof, such as polyethylene and polypropylene. Polyethylene may be low-density, medium-density, high-density polyethylene, and in terms of mechanical strength, high-density polyethylene may be used. In an implementation, two or more types of polyethylene may be mixed to provide flexibility. To provide mechanical strength and high air permeability at the same time, the weight average molecular weight of polyethylene may be 100,000 Dalton to 12 million Dalton, or 200,000 Dalton to 3 million Dalton. Polypropylene may be a homopolymer, a random copolymer, or a block copolymer, and may be used alone or in a combination of two or more of these. The stereoregularity of polypropylene may be isotactic, syndiotactic, or atactic. In an implementation, inexpensive isotactic polypropylene may be used. Polyolefins other than polyethylene or polypropylene and additives such as antioxidants may be added to polyolefin. The porous protecting layer 52 may include a polyolefin such as polyethylene and polypropylene, and may have a multilayer structure of two or more layers. The porous protecting layer 52 may have a mixed multilayer structure a polyethylene/polypropylene two-layer structure, a polyethylene/polypropylene/polyethylene three-layer structure, a polypropylene/polyethylene/polypropylene three-layer structure, or the like, or another suitable structure.

The cellulose polymer may include vegetable cellulose polymers, animal cellulose polymers, microbial or bacterial cellulose polymers, or a combination thereof.

The porous protecting layer 52 may be a porous film. The porous film may be woven or non-woven. The porous film may be prepared by wet or dry methods. In the case of a wet method the porous film may be prepared by removing a good solvent and a non-solvent in a composition including the good solvent and the non-solvent. In the case of a dry method, the porous film may be prepared by stretching the polymer film in the longitudinal direction (MD, machine direction) and/or the width direction (TD, transverse direction). Stretching of the polymer film may be performed in a vaporized solvent atmosphere.

The porous protecting layer 52 may include a porous film, which may include a cellulose polymer. The porous film may include a cellulose nanofiber. The cellulose polymer may include a cellulose nanofiber. The cellulose nanofiber included in the porous film may include microbial cellulose or bacterial cellulose nanofibers, lignocellulosic nanofibers, and the like. Microbial or bacterial cellulose nanofibers are a result of fermentation of a culture medium containing microorganisms and may be obtained directly from a culture solution containing microorganisms. The carboxyl group-containing cellulose nanofibers included in the porous film may be carboxyl group-containing microbial or bacterial cellulose nanofibers. The carboxyl group-containing microbial or bacterial cellulose nanofibers may be a result of fermentation of a culture medium containing microorganisms, and may be obtained directly from a culture solution containing microorganisms. The carboxyl group-containing microbial or bacterial cellulose nanofibers included in the porous film may be distinguished from the conventional mixture of microbial or bacterial cellulose nanofibers and carboxyl group-containing compounds. The lignocellulosic nanofibers may be obtained by decomposing a lignocellulosic material. The average diameter of the cellulose nanofibers included in the porous film may be 100 nm or less, 80 nm or less, 60 nm or less, 50 nm or less, 45 nm or less, 40 nm or less, 35 nm or less, 30 nm or less, or 25 nm or less. The average diameter of the cellulose nanofibers included in the porous film may be 1 nm to 100 nm, 1 nm to 80 nm, 1 nm to 60 nm, 1 nm to 50 nm, 1 nm to 45 nm, or 5 nm to 45 nm. When the porous film includes cellulose nanofibers having these ranges of average diameter, the tensile strength of the porous film may be improved. The thermal shrinkage of the porous film after standing at 150 °C for 30 minutes may be 5% or less, 4.5% or less, 4% or less, 3.5% or less, 3% or less, 2.5% or less, 2% or less, 1.5% or less, or 1% or less. The porous film may provide excellent thermal stability at a high temperature of 150 °C or higher, and the heat resistance of the porous multilayer member 50 including the porous film and the all solid secondary battery 1 may be increased.

The porous protecting layer 52 may include the porous film, and the porous film may have a single-layer or multilayer structure. Depending on the conditions required for the porous multilayer member 50, the porous film may have a single-layer structure or a multilayer structure. The porous film may be a non-adhesive film.

### [Solid electrolyte layer]

### [Solid electrolyte layer: sulfide solid electrolyte]

Referring to FIGS. 1 to 4, the solid electrolyte layer 30 is between the cathode layer 10 and the anode layer 20. The solid electrolyte layer 30 may include a sulfide solid electrolyte.

The sulfide solid electrolyte included in the solid electrolyte layer 30 may include Li₂S-P₂S₅, Li₂S-P₂S₅-LiX (where X is a halogen), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each a positive number, and Z is one of Ge, Zn, and Ga), Li₂S-GeS₂, Li₂S-SiS₂-Li₃PO₄, Li₂S-SiS₂-LiₚMO_{q} (where p and q are each a positive number, and M is one of P, Si, Ge, B, Al, Ga, and In), Li₇₋ₓPS₆₋ₓClₓ (where 0≤x≤2), Li₃PS₄, Li₇P₃S₁₁, Li₇₋ₓPS₆₋ₓBrₓ (where 0≤x≤2), or Li₇₋ₓPS₆₋ₓIₓ (where 0≤x≤2). The sulfide solid electrolyte may be prepared by melting and quenching or mechanical milling starting materials (e.g., Li₂S or P₂S₅). Subsequently, the resultant may be heat-treated. The solid electrolyte may be amorphous, crystalline, or in a mixed state thereof. The solid electrolyte may include, as a constituent element, sulfur (S), phosphorus (P), or lithium (Li) from among the sulfide solid electrolyte materials as described above. The solid electrolyte may be a material including Li₂S-P₂S₅. When a material containing Li₂S-P₂S₅ as a sulfide solid electrolyte material that forms a solid electrolyte, the mixing molar ratio of Li₂S and P₂S₅ may be Li₂S: P₂S₅ = 50: 50 to 90: 10. The sulfide solid electrolyte may include an argyrodite-type solid electrolyte represented by Formula 1:

<Formula 1 > Li⁺₁₂₋ₙ₋ₓAⁿ⁺X²⁻₆₋ₓY⁻ₓ

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or N₃, 1≤n≤5, and 0≤x≤2. The sulfide solid electrolyte may be an argyrodite-type compound including Li₇₋ₓPS₆₋ₓClₓ (where 0≤x≤2), Li₇₋ₓPS₆₋ₓBrₓ (where 0≤x≤2), or Li₇₋ₓPS₆₋ₓIₓ (where 0≤x≤2). The sulfide solid electrolyte may be an argyrodite-type compound including Li₆PS₅Cl, Li₆PS₅Br, or Li₆PS₅I. A density of the argyrodite-type solid electrolyte may be in a range of about 1.5 g/cc to about 2.0 g/cc. When a density of the argyrodite-type solid electrolyte is about 1.5 g/cc or higher, internal resistance of an all solid secondary battery may decrease, and penetration of a solid electrolyte layer by migration of Li may be effectively suppressed.

The elastic modulus of a sulfide solid electrolyte may be less than 40 GPa. The elastic modulus of the sulfide solid electrolyte may be in a range of 5 GPa to 40 GPa, 10 GPa to 40 GPa, or 15 GPa to 30 GPa, measured according to ASTM E2769-22.

The average particle diameter of the sulfide solid electrolyte particles included in solid electrolyte layer 30 may be in a range of 1 µm to 50 µm, 3 µm to 30 µm, or 3 µm to 20 µm. When the sulfide solid electrolyte particles have such ranges of an average particle diameter, the cyclic characteristics of the all solid secondary battery may be further improved.

### [Solid electrolyte layer: binder]

The solid electrolyte layer 30 may further include a binder. The binder in the solid electrolyte layer 30 may be styrene butadiene rubber (SBR), polytetrafluoroethylene, polyvinylidene fluoride, or polyethylene, or other suitable material. The binder included in the solid electrolyte layer 30 may be the same as or different from the binder included in a cathode active material layer 12 and an anode active material layer 22. The binder may be omitted.

The binder included in the solid electrolyte layer 30 may include a conductive binder or a non-conductive binder.

The conductive binder may be an ionically conductive binder, or an electronically conductive binder. A binder having both ionically conductive and electronically conductive properties may belong to an ionically conductive binder and an electronically conductive binder.

The ionically conductive binder may be polytetrafluoroethylene (PTFE), polyvinylidene fluoride (PVDF), polystyrene sulfonate (PSS), polyvinylidene fluoride-hexafluoropropylene copolymer (PVDF-HFP), polyvinyl fluoride (PVF), polymethylmethacrylate (PMMA), polyethylene oxide (PEO), polyethylene glycol (PEG), polyacrylonitrile (PAN), polyethylenedioxythiophene (PEDOT), polypyrrole (PPY), polyaniline, or polyacetylene. The ionically conductive binder may include a polar functional group. An ionically conductive binder containing a polar functional group may be Nafion, Aquivion, Flemion, Gore, Aciplex, Morgane ADP, sulfonated poly(ether ketone) (SPEEK), sulfonated poly(arylene ether ketone sulfone (SPAEKKS), sulfonated poly(aryl ether ketone) (SPAEK), poly[bis(benzimidazobenzisoquinolinones)] (SPBIBI), polystyrene sulfonate (PSS), or lithium 9,10-diphenylanthracene-2-sulfonate (DPASLi⁺). The electronically conductive binder may be polyacetylene, polythiophene, polypyrrole, poly(p-phenylene), poly(phenylenevinylene), poly(phenylenesulfide), polyaniline, or the like.

The binder included in the solid electrolyte layer 30 may include a first binder. The first binder may be a dry binder. A dry binder is a binder that is not impregnated, dissolved, or dispersed in a solvent. A dry binder is a binder that does not contain or come into contact with a solvent.

The first binder may be a fibrillized binder. The fibrillized binder may act as a matrix in the form of fibers, the matrix supporting a plurality of sulfide solid electrolyte particles included in the solid electrolyte layer, and binding the same together. It may be seen in a scanning electron microscope image shape of the cross-section of the electrode that the fibrillized binder has a fibrous shape. The fibrillized binder may have an aspect ratio of 10 or more, 20 or more, 50 or more, or 100 or more. The first binder may be polytetrafluoroethylene (PTFE), a polyvinylidene fluoride-hexafluoropropylene (PVDF-HFP) copolymer, or the like, or other suitable fibrillized binder used in the preparation of a dry composition. The first binder may include a fluorine binder. The fluorine binder maybe polytetrafluoroethylene (PTFE).

The binder included in the solid electrolyte layer 30 may include a second binder. The second binder may be a dry binder. The dry binder may be the same as described in connection with the first binder.

The second binder may be a non-fibrillized binder. The non-fibrillized binder may act as a binding site which supports sulfide solid electrolyte particles included in the solid electrolyte layer, and binds the same together. It may be seen in a scanning electron microscope image shape of the cross-section of the electrode that the non-fibrillized binder does not have a fibrous shape, but is in a particulate form. The non-fibrillized binder may have an aspect ratio of 5 or less, 3 or less, or 2 or less. The second binder may be polyvinylidene fluoride (PVDF), polyvinyl alcohol, polyacrylonitrile, carboxymethyl cellulose (CMC), starch, hydroxypropyl cellulose, cellulose, polyvinylpyrrolidone, polyethylene, polypropylene, ethylene-propylene-diene polymer (EPDM), sulfonated-EPDM, styrene-butadiene rubber (SBR), fluorine rubber, or copolymers thereof, or other suitable binder that is used in the preparation of a dry electrode. The second binder may include a fluorine binder. The fluorine binder may be polyvinylidene fluoride (PVDF).

The amount of the binder included in the solid electrolyte layer 30 may be in the range of 1 wt% to 10 wt%, 1 wt% to 5 wt%, or 1 wt% to 3 wt% based on the total weight of the solid electrolyte layer. When the solid electrolyte layer includes such amount ranges of the binder, the binding force of the solid electrolyte layer 30 may be improved, and the all solid secondary battery may maintain a high energy density.

The solid electrolyte layer 30 may be a self-standing film. The solid electrolyte layer may maintain the form of a film without a support. Therefore, the solid electrolyte layer may be prepared as a separate self-standing film and then placed between the cathode layer and the anode layer. The solid electrolyte layer 30 may be free of a residual processing solvent. The solid electrolyte layer may be manufactured in a dry manner, and a processing solvent, which is intentionally added, may not be included. The solid electrolyte layer 30 does not contain a residual processing solvent. An unintentional trace amount of solvent may remain in the solid electrolyte layer, but this solvent is not a deliberately added processing solvent. The solid electrolyte layer 30 is distinguished from a wet solid electrolyte layer prepared by mixing the sulfide solid electrolyte particles with the processing solvent and then removing some or all of the processing solvent by drying.

### [Anode layer]

### [Anode layer: anode active material]

Referring to FIGS. 1 to 4, the anode layer 20 may include an anode current collector 21 and a first anode active material layer 22 on the anode current collector 21. The first anode active material layer 22 may include an anode active material and a binder.

An anode active material included in the first anode active material layer 22 may be in the form of particles. The average particle diameter of the anode active material having a particle shape may be 4 µm or less, 3 µm or less, 2 µm or less, 1 µm or less, or 900 nm or less. The average particle diameter of the anode active material having a particle shape may be in a range of 10 nm to 4 µm, 10 nm to 3 µm, 10 nm to 2 µm, 10 nm to 1 µm, or 10 nm to 900 nm. When the average particle diameter of the anode active material is within these ranges, reversible absorption or desorption of lithium during a charging/discharging process may further be facilitated. The average particle diameter of the anode active material may be a median particle diameter (D50) as measured by a laser-diffraction particle size distribution analyzer.

The anode active material included in the first anode active material layer 22 may include a carbonaceous anode active material or a metal or metalloid anode active material.

The carbonaceous anode active material may be amorphous carbon. Examples of the amorphous carbon may include carbon black (CB), acetylene black (AB), furnace black (FB), ketjen black (KB), or graphene, or other suitable material available as amorphous carbon. The amorphous carbon refers to carbon without crystallinity or with very low crystallinity, and is distinguished from crystalline carbon or graphitic carbon.

The metal or metalloid anode active material may include gold (Au), platinum (Pt), palladium (Pd), silicon (Si), silver (Ag), aluminum (Al), bismuth (Bi), tin (Sn), or zinc (Zn), or other suitable metal anode active material or metalloid anode active material capable of forming an alloy or compound with lithium. For example, nickel (Ni) does not form an alloy with lithium and thus may not be used as the metal anode active material.

The first anode active material layer 22 may include a single kind of anode active material or a mixture of a plurality of different anode active materials selected from these anode active materials. The first anode active material layer 22 may include amorphous carbon alone, or gold (Au), platinum (Pt), palladium (Pd), silicon (Si), silver (Ag), aluminum (Al), bismuth (Bi), tin (Sn), or zinc (Zn). The first anode active material layer 22 may include a mixture of amorphous carbon and gold (Au), platinum (Pt), palladium (Pd), silicon (Si), silver (Ag), aluminum (Al), bismuth (Bi), tin (Sn), or zinc (Zn). In a mixture of amorphous carbon and gold (Au), a mixed ratio of the amorphous carbon to gold (Au) may be about 10:1 to about 1:2, about 5:1 to about 1:1, or about 4:1 to about 2:1, or the mixed weight ratio may be appropriately chosen according to desired characteristics of the all solid secondary battery 1. When the anode active material of the first anode active material layer 22 has a composition as described above, the all solid secondary battery 1 may have further improved cycle characteristics.

The anode active material included in the first anode active material layer 22 may include a mixture of first particles of amorphous carbon and second particles of a metal or metalloid. Examples of the metal or metalloid may include gold (Au), platinum (Pt), palladium (Pd), silicon (Si), silver (Ag), aluminum (Al), bismuth (Bi), tin (Sn), and zinc (Zn). The metalloid may be a semiconductor. An amount of the second particles may be in a range of about 8 weight% (wt%) to about 60 wt%, about 10 wt% to about 50 wt%, about 15 wt% to about 40 wt%, or about 20 wt% to about 30 wt%, based on the total weight of the mixture. When the amount of the second particles is within these ranges, the all solid secondary battery 1 may have further improved cycle characteristics.

### [Anode layer: Binder]

The binder included in the first anode active material layer 22 may be styrene butadiene rubber (SBR), polytetrafluoroethylene, polyvinylidene fluoride, polyethylene, a vinylidene fluoride/hexafluoropropylene copolymer, polyacrylonitrile, polymethyl methacrylate, or the like. The binder may be a suitable binder material. The binder may include a single binder or a plurality of different binders.

By the inclusion of a binder in the first anode active material layer 22, the first anode active material layer 22 may be stabilized on the anode current collector 21. In an implementation, despite a change in volume and/or relative position of the first anode active material layer 22 during charging and discharging, cracking of the first anode active material layer 22 may be suppressed. If the first anode active material layer 22 were to not include a binder, the first anode active material layer 22 could be easily separated from the anode current collector 21. In a portion of the anode current collector 21 which is exposed due to the separation of the first anode active material layer 22 from the anode current collector 21, the anode current collector 21 could come into contact with the solid electrolyte layer 30, increasing the possibility of a short circuit. The first anode active material layer 22 may be formed by coating, on the anode current collector 21, a slurry in which materials constituting the first anode active material layer 22 are dispersed, and drying the slurry. By the inclusion of a binder in the first anode active material layer 22, the anode active material may be stably dispersed in the slurry. In an implementation, when the anode current collector 21 is coated with the slurry using a screen printing method, clogging of the screen (e.g., clogging by the aggregate of the anode active material) may be suppressed.

### [Anode layer: Additive]

The first anode active material layer 22 may further include additives a filler, a coating agent, a dispersant, or an ion conducting agent, suitably used in an all solid secondary battery.

### [Anode layer: first anode active material layer]

A thickness of the first anode active material layer 22 may be about 50 % or less, about 40 % or less, about 30 % or less, about 20 % or less, about 10 % or less, or about 5 % or less of a thickness of the cathode active material layer 12. The thickness of the first anode active material layer 22, 22a, 22b may be in the range of 1 µm to 20 µm, 2 µm to 10 µm, or 3 µm to 7 µm. If the thickness of the first anode active material layer 22 were to be too small, lithium dendrite formed between the first anode active material layer 22 and the anode current collector 21, 21a, 21b could collapse the first anode active material layer 22, and thus, it could be difficult to improve the cyclic characteristics of the all solid secondary battery 1. If the thickness of the first anode active material layer 22 were to be increased excessively, the energy density of the all solid secondary battery 1 could be reduced and the internal resistance of the all solid secondary battery 1 due to the first anode active material layer 22 could be increased, and thus it could be difficult to improve cyclic characteristics of the all solid secondary battery 1.

In an implementation, when the thickness of the first anode active material layer 22 is reduced, the charging capacitance of the first anode active material layer 22 may also be reduced. The charging capacitance of the first anode active material layer 22 may be 50% or less, 40% or less, 30% or less, 20% or less, 10% or less, 5% or less, or 2% or less compared to the charging capacitance of the cathode active material layer 12. The charging capacitance of the first anode active material layer 22 may be in a range of 0.1% to 50%, 0.1% to 30%, 0.1% to 10%, 0.1% to 5%, or 0.1% to 2% of the charging capacitance of the cathode active material layer 12. If the charging capacitance of the first anode active material layer 22 were to be too small, the thickness of the first anode active material layer 22 could become very thin, so lithium dendrites formed between the first anode active material layer 22 and the anode current collector 21 during repeated charging and discharging processes could collapse the first anode active material layer 22, making it difficult to improve the cyclic characteristics of the all solid secondary battery 1. If the charging capacitance of the first anode active material layer 22 were to be increased excessively, the energy density of the all solid secondary battery 1 could be lowered and the internal resistance of the all solid secondary battery 1 by the first anode active material layer 22 could be increased, thereby making it difficult to improve the cyclic characteristics of the all solid secondary battery 1.

The charging capacitance of the cathode active material layer 12 may be obtained by multiplying the charging capacitance density (mAh/g) of the cathode active material by the mass of the cathode active material in the cathode active material layer 12. When several types of the cathode active material are used, for each cathode active material, the charging capacitance density may be multiplied by the mass value, and the sum of these values is the charging capacitance of the cathode active material layer 12. The charging capacitance of the first anode active material layer 22 may also be calculated in the same manner. The charging capacitance of the first anode active material layer 22 may be obtained by multiplying the charge-capacitance density (mAh/g) of the anode active material by the mass of the anode active material in the first anode active material layer 22. When several types of anode active materials are used, for each anode active material, the charging capacitance density may be multiplied by the mass value thereof, and the sum of these values is the charging capacitance of the first anode active material layer 22. The charging capacitance densities of the cathode active material and the anode active material may be estimated capacities obtained with an all-solid half-cell including lithium metal as a counter electrode. The charging capacitance of the cathode active material layer 12 and the first anode active material layer 22 may be directly measured by the charging capacitance measurement using an all solid half-cell. The measured charging capacitance of each of the cathode active material and the anode active material may be divided by a weight of the corresponding active material, thereby obtaining a charging capacitance density. The charging capacitance of each of the cathode active material layer 12 and the first anode active material layer 22 may be the initial charging capacitance measured during the 1^{st} cycle charging.

### [Anode layer: second anode active material layer]

The all solid secondary battery 1 may further include a second anode active material layer between the anode current collector 21 and the first anode active material layer 22 by charging. The second anode active material layer may be a metal layer including lithium or a lithium alloy. The metal layer may include lithium or a lithium alloy. The second anode active material layer may be a metal layer including lithium, and the second anode active material layer may act as a lithium reservoir. The lithium alloy may be a Li-Al alloy, a Li-Sn alloy, a Li-In alloy, a Li-Ag alloy, a Li-Au alloy, a Li-Zn alloy, a Li-Ge alloy, or a Li-Si alloy, or other suitable lithium alloy. The second anode active material layer may include one of these alloys or lithium or may include various alloys. The second anode active material layer may be a plated layer. The second anode active material layer may be precipitated between the first anode active material layer 22 and the anode current collector 21 during the charging process of the all solid secondary battery 1.

The thickness of the second anode active material layer may be in a range of 1 µm to 200 µm, 1 µm to 150 µm, 1 µm to 100 µm, or 1 µm to 50 µm. If the second anode active material layer were to be too thin, the second anode active material layer may not act as a lithium reservoir. If the second anode active material layer were to be too thick, the mass and volume of the all solid secondary battery 1 could be increased and the cyclic characteristics thereof may rather deteriorate. The second anode active material layer may be a metal foil having such ranges of thickness.

The second anode active material layer of the all solid secondary battery 1 may be placed between the anode current collector 21 and the first anode active material layer 22 before the assembly of the all solid secondary battery 1. The second anode active material layer of the all solid secondary battery 1 may be precipitated between the anode current collector 21 and the first anode active material layer 22 by charging after the assembly. When the second anode active material layer is disposed between the anode current collector 21 and the first anode active material layer 22 before the assembly of the all solid secondary battery 1, the second anode active material layer may be a metal layer containing lithium, and the second anode active material layer may act as a lithium reservoir. In an implementation, a lithium foil may be placed between the anode current collector 21 and the first anode active material layer 22 before the assembly of the all solid secondary battery 1. Accordingly, the cyclic characteristics of the all solid secondary battery 1 including the second anode active material layer may be further improved. When the second anode active material layer is precipitated by charging after assembling the all solid secondary battery 1, the second anode active material layer may not be included during the assembly of the all solid secondary battery 1, and the energy density of the all solid secondary battery 1 may be increased. The all solid secondary battery 1 may be charged such that the charging capacitance of the first anode active material layer 22 is exceeded. The first anode active material layer 22 may be overcharged. At an initial charging stage, lithium may be absorbed into the first anode active material layer 22. The anode active material included in the first anode active material layer 22 may form an alloy or a compound with lithium ions that have migrated from the cathode layer 10. When charging is performed until the charging capacitance of the first anode active material layer 22 is exceeded lithium is precipitated on the back side of the first anode active material layer 22 between the anode current collector 21 and the first anode active material layer 22, and due to the precipitated lithium, a metal layer corresponding to the second anode active material layer may be formed. The second anode active material layer may be a metal layer including lithium (i.e., metal lithium) as a major component. This result is obtained since the anode active material included in the first anode active material layer 22 includes a material that forms an alloy or compound with lithium. During discharging, lithium in the first anode active material layer 22 and the second anode active material layer the metal layer, is ionized and moves in the direction toward the cathode layer 10. Accordingly, lithium may be used as an anode active material in the all solid secondary battery 1. The first anode active material layer 22 may coat the second anode active material layer, and the first anode active material layer 22 may act as a protecting layer of the second anode active material layer and at the same time, suppress the precipitation and growth of lithium dendrite. In an implementation, a short-circuit and reduction in the capacitance of the all solid secondary battery 1 may be suppressed, and consequently cycle characteristics of the all solid secondary battery 1 may be improved. In an implementation, when the second anode active material layer is provided through charging after assembly of the all solid secondary battery 1, the anode current collector 21, the first anode active material layer 22, and a region therebetween may be Li-free regions which do not include lithium (Li) in an initial state or a post-discharging state of the all solid secondary battery 1.

### [Anode layer: anode current collector]

The anode current collector 21 may include a material that does not react with lithium a material that does not form, together with lithium, an alloy or a compound. Examples of the material of the anode current collector 21 may include copper (Cu), stainless steel, titanium (Ti), iron (Fe), cobalt (Co), and nickel (Ni), or other suitable material available as an electrode current collector. The anode current collector 21 may include one of the examples of the metal, or an alloy or a coating material of at least two metals selected from the examples. The anode current collector 21 may be in the form of a plate or a foil.

The all solid secondary battery 1 may further include a thin film including an element capable of forming an alloy with lithium on the anode current collector 21. The thin film may be between the anode current collector 21 and the first anode active material layer 22. The thin film may include an element alloyable with lithium. Examples of the element alloyable with lithium may include gold, silver, zinc, tin, indium, silicon, aluminum, and bismuth, or other suitable element alloyable with lithium. The thin film may include one of these metals, or alloys of various metals. When the thin film is provided on the anode current collector 21 a precipitation form of the second anode active material layer precipitated between the thin film and the first anode active material layer 22 may be further planarized, and thus cyclic characteristics of the all solid secondary battery 1 may further be improved.

The thickness of the thin film may be in a range of 1 nm to 800 nm, 10 nm to 700 nm, 50 nm to 600 nm, or 100 nm to 500 nm. If the thickness of the thin film were to be less than 1 nm, it could be difficult to exert the function of the thin film. If the thickness of the thin film were to be too large, the thin film itself could absorb lithium, and thus, the amount of lithium precipitated could be reduced, thus reducing the energy density of the all solid secondary battery 1 and deteriorating the cyclic characteristics of the all solid secondary battery 1. The thin film may be disposed on the anode current collector 21 by a vacuum deposition method, a sputtering method, a plating method, or the like. A suitable method capable of forming the thin film may be used.

### [Cathode layer]

### [Cathode layer: cathode active material]

Referring to FIGS. 1 to 4, the cathode active material layer 12 may include a cathode active material and a solid electrolyte.

The cathode active material included in the cathode active material layer 12 may be a cathode active material that may reversibly absorb and desorb lithium ions. The cathode active material may be a lithium transition metal oxide such as a lithium cobalt oxide (LCO), a lithium nickel oxide, a lithium nickel cobalt oxide, a lithium nickel cobalt aluminum oxide (NCA), a lithium nickel cobalt manganese oxide (NCM), a lithium manganate, or a lithium iron phosphate; a nickel sulfide; a copper sulfide; a lithium sulfide; an iron oxide; or a vanadium oxide, or other suitable material available as a cathode active material. The cathode active material may be one of these examples alone or in a mixture of at least two selected from these examples.

The cathode active material may include a lithium salt of a transition metal oxide that has a layered rock-salt type structure among the examples of the lithium transition metal oxide. For example, the "layered rock-salt type structure" refers to a structure in which an oxygen atom layer and a metal atom layer are alternately and regularly arranged in a <111> direction in a cubic rock-salt type structure, where each of the atom layers forms a two-dimensional flat plane. The "cubic rock-salt type structure" refers to a sodium chloride (NaCl) type structure, which is one of the crystalline structures, in particular, a structure in which face-centered cubic (fcc) lattices respectively formed of anions and cations are shifted by only a half of the ridge of each unit lattice. Examples of the lithium transition metal oxide having the layered rock-salt type structure may include a ternary lithium transition metal oxide expressed as LiNiₓCo_{y}Al_{z}O₂ (NCA) or LiNiₓCo_{y}Mn_{z}O₂ (NCM) (where 0<x<1, 0<y<1, 0<z<1, and x+y+z=1). When the cathode active material includes a ternary lithium transition metal oxide having the layered rock-salt type structure, an energy density and thermal stability of the all solid secondary battery 1 may be improved.

The cathode active material may be covered by a coating layer as described above. The coating layer is any material that may be used as a coating layer of a cathode active material of an all solid secondary battery in the art. The coating layer may be Li₂O-ZrO₂ (LZO).

When the cathode active material includes nickel (Ni) as a ternary lithium transition metal oxide such as NCA or NCM, a capacitance density of the all solid secondary battery 1 may be increased, and thus metal elution from the cathode active material in a charged state may be reduced. As a result, the all solid secondary battery 1 according to an embodiment may have improved cycle characteristics in a charged state.

A shape of the cathode active material may be particle shapes such as a true spherical shape, an elliptical shape, or a spherical shape. In an implementation, a particle diameter of the cathode active material may be in a suitable range applicable to a cathode active material of an all solid secondary battery. In an implementation, an amount of the cathode active material of the cathode layer 10 may be in a suitable range applicable to a cathode layer of an all-solid secondary battery.

### [Cathode layer: solid electrolyte]

The cathode active material layer 12 may include a solid electrolyte. The solid electrolyte included in the cathode layer 10 may be the same as or different from the solid electrolyte included in the solid electrolyte layer 30. The solid electrolyte herein is the same as the solid electrolyte layer 30.

The solid electrolyte included in the cathode active material layer 12 may have a smaller average particle diameter D50 than the solid electrolyte included in the solid electrolyte layer 30. The average particle diameter D50 of the solid electrolyte included in the cathode active material layer 12 may be 90% or less, 80% or less, 70% or less, 60% or less, 50% or less, 40% or less, 30% or less, or 20% or less of the average particle diameter D50 of the solid electrolyte included in the solid electrolyte layer 30.

The D50 average particle diameter is a median particle diameter (D50). The median particle diameter (D50) is a particle size corresponding to a 50% cumulative volume calculated from particles having smaller particle sizes in the particle size distribution measured by the laser diffraction method.

### [Cathode layer: Binder]

The cathode active material layer 12 may include a binder. The binder may be styrene butadiene rubber (SBR), polytetrafluoroethylene, polyvinylidene fluoride, polyethylene, or the like. In an implementation, another suitable binder may be used herein.

### [Cathode layer: conducting agent]

The cathode active material layer 12 may include a conducting agent. The conducting agent may be graphite, carbon black, acetylene black, Ketjen black, carbon fiber, metal powder, or the like, or other suitable conducting agent.

### [Cathode layer: additive]

The cathode active material layer 12 may further include additives such as a filler, a coating agent, a dispersant, and an ion conducting agent, in addition to the cathode active material, the solid electrolyte, the binder, and the conducting agent.

The filler, the coating agent, the dispersant, and the ion conducting agent which may be included in the cathode active material layer 12 may be a suitable material that are used in an electrode of an all solid secondary battery.

### [Cathode layer: cathode current collector]

A cathode current collector 11 may be a plate or a foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may be omitted. The thickness of the cathode current collector 11 may be 1 µm to 100 µm, 1 µm to 50 µm, 5 µm to 25 µm, or 10 µm to 20 µm.

### [Cathode layer: inactive member]

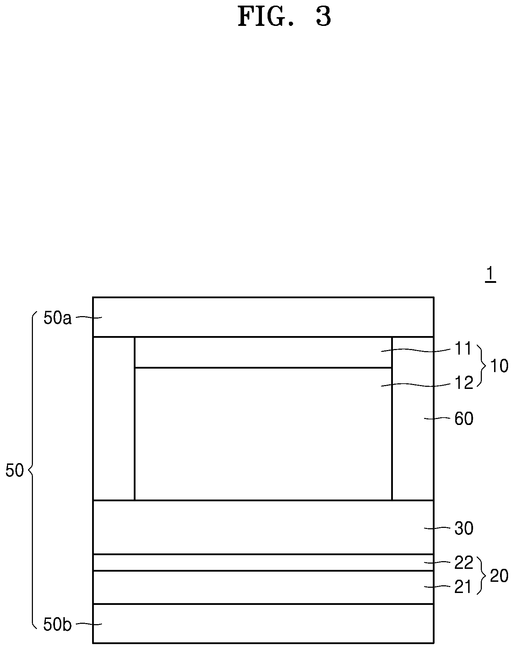

Referring to FIGS. 3 to 4, the cathode layer 10 may include the cathode current collector 11 and the cathode active material layer 12 on one surface of the cathode current collector 11. An inactive member 60 may be on one side of the cathode layer 10. The inactive member 60 may be on one side of the cathode active material layer 12 and the cathode current collector 11. The inactive member 60 may be on one side of the cathode active material layer 12 and on one surface of the cathode current collector 11 facing the solid electrolyte layer. The area of the porous multilayer member 50 may be larger than that of the cathode active material layer 12. The area of the porous multilayer member 50 may be the same as or similar to that of the anode layer 20 or the solid electrolyte layer 30. The porous multilayer member 50 may be the same size or area as or similar to that of the anode layer 20, and the change in the volume of all solid secondary battery 1 may be effectively absorbed.

The inactive member 60 may be included, cracking of the solid electrolyte layer 30 may be prevented during manufacturing or charging/discharging of the all solid secondary battery 1, and thus, the cyclic characteristics of the all solid secondary battery 1 may be improved. If the inactive member 60 is omitted, non-uniform pressure could be applied to the solid electrolyte layer 30 in contact with the cathode layer 10 during the manufacture or charging/discharging of the all solid secondary battery 1, and thus, the solid electrolyte layer 30 could crack, thereby increasing the possibility of the occurrence of a short circuit.

The inactive member 60 may surround the side of the cathode layer 10 and may be in contact with the solid electrolyte layer 30. The inactive member 60 may surround the side of the cathode layer 10 and may come into contact with the solid electrolyte layer 30, and the cracks formed in a portion of the solid electrolyte layer 30 that is not in contact with the cathode layer 10, which could occur due to the difference in the pressure during the pressing process, may be effectively suppressed. The inactive member 60 may surround the side surface of the cathode layer 10, and may be separated from the anode layer 20 the first anode active material layer 22. The inactive member 60 may surround the side of the cathode layer 10 and may contact the solid electrolyte layer 30, and may be separated from the anode layer 20. The possibility of a short circuit occurring due to a physical contact between the cathode layer 10 and the first anode active material layer 22 or a short circuit occurring due to lithium overcharging, may be suppressed.

The inactive member 60 may be a gasket. The gasket may be used as the inactive member 60, and the cracking of the solid electrolyte layer 30 caused by the difference in the pressure during the pressing process may be effectively suppressed.

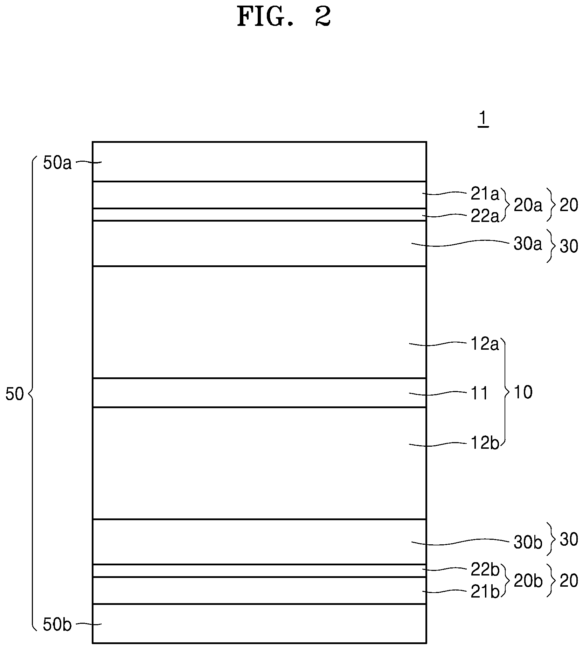

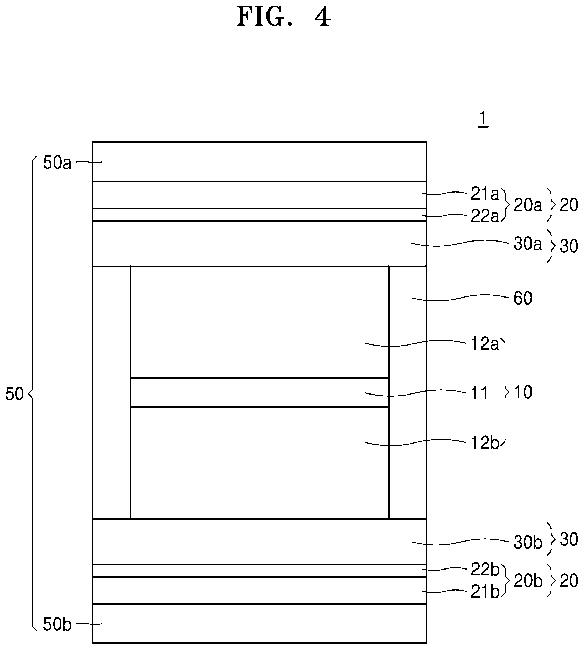

Referring to FIG. 4, the all solid secondary battery 1 may include the cathode layer 10, the anode layer 20, and the solid electrolyte layer 30 therebetween. The cathode layer 10 may include the cathode current collector 11 and a first cathode active material layer 12a and a second cathode active material layer 12b which are respectively on facing (e.g., opposite) surfaces the cathode current collector 11, the solid electrolyte layer 30 may include a first solid electrolyte layer 30a in contact with the first cathode active material layer 12a and a second solid electrolyte layer 30b in contact with the second cathode active material layer 12b. The anode layer 20 may include a first anode layer 20a in contact with the first solid electrolyte layer 30a, a second anode layer 20b in contact with the second solid electrolyte layer 30b. The first solid electrolyte layer 30a and the second solid electrolyte layer 30b may be opposite to each other. The inactive member 60 may surround the side of the cathode layer 10 between the first solid electrolyte layer 30a and the second solid electrolyte layer 30b. The all solid secondary battery 1 may have a bi-cell structure. When the all solid secondary battery 1 has a bi-cell structure, the solid electrolyte layer 30 and the anode layer 20 may each be symmetrically arranged around the cathode layer 10. In an implementation, structural deformation due to the pressure applied when manufacturing the all solid secondary battery 1 may be effectively suppressed. In an implementation, cracking of the solid electrolyte layer 30 may be suppressed during the manufacturing process or charging/discharging process of the all solid secondary battery 1, thereby preventing the short circuit of the all solid secondary battery 1 and consequently improving the cyclic characteristics of the all solid secondary battery 1. The cathode current collector 11 alone may be used for the first cathode active material layer 12a and the second cathode active material layer 12b, and the energy density of the all solid secondary battery 1 may be increased. The area of the porous multilayer member 50 may be larger than that of the first cathode active material layer 12a or the second cathode active material layer 12b. The area of the porous multilayer member 50 may be the same as or similar to that of the anode layer 20 or the solid electrolyte layer 30. The structure of the all solid secondary battery 1 shown in FIG. 2 is substantially the same as the structure of the all solid secondary battery 1 shown in FIG. 4, except that the inactive member 60 is not included in the all solid secondary battery 1 shown in FIG. 4.

### [Electrode assembly stack]

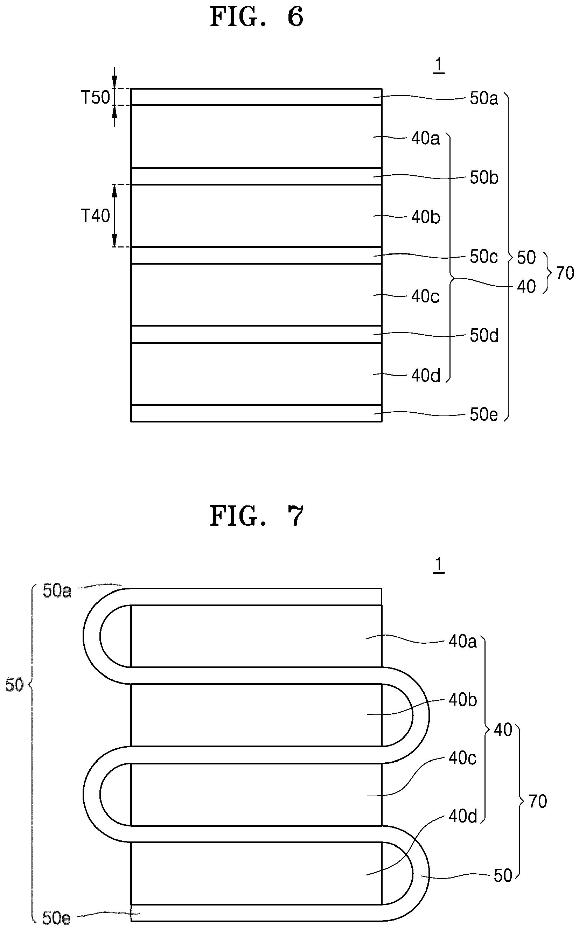

Referring to FIGS. 6 to 7, the all solid secondary battery 1 may include an electrode assembly stack 70. The electrode assembly stack 70 may include a plurality of electrode assemblies 40, 40a, 40b, 40c, and 40d spaced apart from each other in one direction, and the porous multilayer member 50 among the electrode assemblies 40, 40a, 40b, 40c, and 40d. The porous multilayer member 50 may be among the plurality of electrode assemblies 40, and the change in the volume of during charging and discharging of the electrode assembly stack 70 may be effectively absorbed and the structural stability of the all solid secondary battery 1 may be improved. As a result, the lifespan characteristics of the all solid secondary battery 1 may be improved.

A thickness T50 of a porous multilayer member may be smaller than a thickness T40 of an electrode assembly. If the thickness T50 of the porous multilayer member were to be larger than the thickness T40 of the electrode assembly, the energy density of the all solid secondary battery 1 could be excessively reduced. The thickness T50 of the porous multilayer member may be 90% or less, 80% or less, 70% or less, 50% or less, 30% or less, 20% or less, or 10% or less of the thickness T40 of the electrode assembly.

Referring to FIG. 6, in the electrode assembly stack 70, a plurality of porous multilayer members 50b, 50c, and 50d may be among the plurality of electrode assemblies 40a, 40b, 40c, and 40d spaced apart from each other, and porous multilayer members 50a and 50e may be additionally on the outermost layers of the electrode assembly stack 70. The electrode assembly stack 70 may be prepared in a magazine manner in which the plurality of porous multilayer members 50b, 50c, and 50d are discontinuously among the plurality of electrode assemblies 40a, 40b, 40c, and 40d.

Referring to FIG. 7, in the electrode assembly stack 70, one porous multilayer member the porous multilayer member 50, may extend among the plurality of electrode assemblies 40a, 40b, 40c, and 40d spaced apart from each other while bending a plurality of times, and in the outermost layers of the electrode assembly stack 70, the porous multilayer members 50a and 50e may extend from the porous multilayer member 50. The electrode assembly stack 70 may be prepared in a reel manner in which one porous multilayer member 50 is continuous among the plurality of electrode assemblies 40a, 40b, 40c, and 40d.

In an implementation, a pressure plate may be additionally on facing surfaces of the electrode assembly stack 70 in the all solid secondary battery 1. When pressure plate is additionally included, a constant level of pressure may be applied to the electrode assembly 40.

### [Manufacturing of all solid secondary battery]

### (Manufacturing of porous multilayer member)

A porous multilayer member may be prepared by placing the porous film on one surface or opposite surfaces of the porous sheet. The porous sheet corresponds to the porous cushioning layer and the porous film corresponds to the porous protecting layer.

The porous sheet may be a porous foam sheet or a porous sponge sheet. When the porous sheet has adhesiveness, the porous film may be easily attached directly on one surface or opposite surfaces of the porous sheet. In an implementation, a binder may be additionally placed to improve adhesiveness between the porous sheet and the porosity film. The binder may be the same as the binder used for the cathode layer, the anode layer and/or the solid electrolyte layer.

The porous sheet may have a thickness of 10 µm to 200 µm, and an air permeability of 1,000 sec/100 cc or more. The porous sheet may be understood by referring to the porous cushioning layer.

The porous film may have a thickness of 1 µm to 50 µm, an air permeability of 1,000 sec/100 cc or less, a porosity of 5 % to 95 %, and a pore size of 0.01 µm to 20 µm. The porous film may be understood by referring to the porous protecting layer.

The porosity or average pore size of the porous sheet and the porous film may be measured using the BET 6-point method by the nitrogen gas adsorption flow method, through a scanning electron microscope (SEM), a mercury porosimeter, a capillary flow porometer, or a porosimetry analyzer (Bell Japan Inc, Belsorp-II mini).

### (Preparation of solid electrolyte layer)

The solid electrolyte layer may be manufactured by using a dry method or a wet method.

A method of manufacturing a solid electrolyte layer by using a dry method may include preparing a dry mixture by dry mixing a sulfide solid electrolyte and a binder, preparing a solid electrolyte layer by molding the dry mixture, and disposing the solid electrolyte layer between the cathode layer and the anode layer.

First, a dry mixture may be prepared by mixing a sulfide solid electrolyte and a binder. Dry mixing refers to mixing without a processing solvent. A dry mixture refers to a mixture to which no processing solvent is intentionally added. The processing solvent is a solvent used in the preparation of the electrode slurry. The binder may be a dry binder. A dry binder refers to a binder that does not contain a processing solvent. The processing solvent may be water, NMP, or the like, or other suitable processing solvent that is used in the preparation of electrode slurry. In an implementation, dry mixing may be performed at a temperature of 25 °C to 85 °C or 65 °C to 85 °C using a stirrer. Dry mixing may be performed using a stirrer at a rotation speed of 10 rpm to 10,000 rpm, or 100 rpm to 10,000 rpm. In an implementation, dry mixing may be performed 1 to 200 minutes using a stirrer. Dry mixing may be performed one or more times. A dry mixture including a fibrillized dry binder may be obtained by dry mixing. A stirrer may be a mixer or a kneader. The stirrer may include a chamber, one or more rotating shafts disposed inside the chamber to rotate, and a blade rotatably coupled to the rotating shafts and in the longitudinal direction of the rotating shafts. The blade may include a ribbon blade, a sigma blade, a jet (Z) blade, a dispersion blade, or a screw blade. When a blade is included, even without the solvent, the sulfide solid electrolytet, and the dry binder may be effectively mixed to prepare a dough-type mixture.

Next, a solid electrolyte layer may be prepared by molding a dry mixture. The prepared dry mixture may be extruded in the form of a sheet by putting the same into an extrusion device. The pressure at the time of extrusion may be in a range of 4 MPa to 100 MPa, or 10 MPa to 90 MPa. The resulting mixture may be in the form of a sheet. The obtained sheet-form mixture may be a solid electrolyte layer. The extrusion device may be a roller or an extruder. The types and contents of sulfide solid electrolytes and binders may be understood by referring to the solid electrolyte layer. The binder may be omitted. The sulfide solid electrolyte particles may be partially sintered by pressure, and the binder may be omitted.

A method for preparing a solid electrolyte layer according to a wet method may include preparing a slurry by mixing a sulfide solid electrolyte, a binder, and a solvent, forming and drying the slurry to prepare a solid electrolyte layer, and disposing the solid electrolyte layer between the cathode layer and the anode layer.

First, slurry may be prepared by mixing a sulfide solid electrolyte, a binder, and a solvent. The sulfide solid electrolytes and the binder may be understood by referring to the solid electrolyte layer. The binder may be the same as or different from the binder used in the dry method. The binder in the solid electrolyte layer may be styrene butadiene rubber (SBR), polytetrafluoroethylene, polyvinylidene fluoride, or polyethylene, or other suitable material available as a binder. The solvent may be a suitable solvent that does not react with the sulfide solid electrolyte and is capable of dissolving the binder. The solvent may be octyl acetate.

Next, a solid electrolyte layer may be prepared by molding and drying the slurry. The slurry may be applied on a substrate and then dried, and then separated from the substrate to prepare a solid electrolyte layer. The application method and drying conditions may be suitable methods and/or conditions.

Next, the solid electrolyte layer may be placed between the cathode layer and the anode layer. The solid electrolyte layer may be prepared as a separate solid electrolyte layer as described above, and then placed on the cathode layer or anode layer. The solid electrolyte layer may be prepared by applying and drying the slurry on the cathode layer and/or the anode layer.

### (Preparation of anode layer)

The anode layer may be manufactured by a suitable anode layer manufacturing method. In an implementation, an anode slurry may be prepared by mixing an anode active material, a conductive material, a binder, and a solvent. The anode slurry is coated on an anode current collector and then dried, thereby preparing an anode layer. A solvent used for the preparation of the anode slurry may be a suitable solvent used for an anode slurry. The solvent used for the anode slurry may be NMP. The types and amounts of the anode current collector, the anode active material, the conducting agent, and the binder may be understood by referring to the anode layer described above.

### (Preparation of cathode layer)

The cathode layer may be manufactured by using a wet method or a dry method.

The cathode layer may be manufactured by using a wet method. A cathode active material, a sulfide solid electrolyte, a conducting agent, a binder, and a solvent may be mixed to prepare a cathode slurry. The cathode slurry may be coated on a cathode current collector and then dried, thereby preparing a cathode layer. A solvent used for the preparation of the cathode slurry may be a suitable solvent used for a cathode slurry. The solvent used for the cathode slurry herein may be para-xylene. The types and amounts of the cathode current collector, the cathode active material, the conducting agent, and the binder may be understood by referring to the cathode layer described above.

The cathode layer may be manufactured by using a dry method. First, a cathode active material, a sulfide solid electrolyte, a conducting agent, and a binder may be dry-mixed to prepare a dry mixture. Next, the dry mixture may be molded to prepare a cathode active material layer. Subsequently, the prepared cathode active material layer may be placed on one surface or facing surfaces of the cathode current collector and then a pressure may be applied thereto to prepare a cathode layer. The binder may be a dry binder. Specific manufacturing conditions and methods in preparing the dry mixture and molding the dry mixture, are substantially the same as the method for preparing the solid electrolyte layer described above. The types and amounts of the cathode current collector, the cathode active material, the conducting agent, and the binder may be understood by referring to the cathode layer described above.

### (Preparation of all solid secondary battery)

In an implementation, an all solid secondary battery may be prepared as follows.

First, an electrode assembly including a cathode layer, an anode layer, and a solid electrolyte layer between the anode layer and the cathode layer, may be provided.

A solid electrolyte layer may be on the anode layer such that the anode active material layer is in contact with the solid electrolyte layer, to prepare an anode layer/solid electrolyte layer stack. Then, the anode layer/solid electrolyte layer/cathode layer stack may be prepared by placing the solid electrolyte layer on one surface or facing surfaces of the cathode layer such that the solid electrolyte layer faces the cathode active material layer. The prepared anode layer/solid electrolyte layer/cathode layer stack may be subjected to a press treatment at 50 °C to 100 °C at a pressure of 300 MPa to 600 MPa for 10 minutes to 60 minutes. Due to the plate pressing, the solid electrolyte layer may be partially sintered and thus, characteristics of an all solid secondary battery may be improved. The pressed stack may be provided as an electrode assembly.

Then, the porous multilayer member may be placed on one surface or facing surfaces of the electrode assembly. The porous multilayer member may include a porous cushioning layer, and a porous protecting layer on one surface or facing surfaces of the porous cushioning layer.

The porous multilayer member may be on one surface or facing surfaces of the electrode assembly, and the electrode assembly with the porous multilayer member thereon, may be sealed with an exterior material to complete an all solid secondary battery.

In an implementation, a plurality of electrode assemblies spaced apart in the thickness direction may be prepared, and a plurality of porous multilayer members may be disposed among the plurality of electrode assemblies spaced apart to prepare an electrode assembly stack. The electrode assembly stack may be sealed with exterior material to complete an all solid secondary battery. In an implementation, a plurality of electrode assemblies spaced apart in the thickness direction may be prepared, and one porous multilayer member may extend, while bending a plurality of times, among the plurality of electrode assemblies spaced apart to prepare an electrode assembly stack. The electrode assembly stack may be sealed with exterior material to complete an all solid secondary battery.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Examples.

### Example 1: Polyethylene (PE) (7.7 µm)/polyacrylic foam (100 µm)/PE (7.7 µm) porous multilayer member

### (Manufacturing of porous multilayer member)

A porous polyacrylic foam sheet (YT-3720BHF, Youngwoo Co. Ltd., Korea) was prepared. A porous polyethylene film (Cangzhou Mingzhou Plastic Co, Ltd., China) was prepared. The porous polyacrylic foam sheet is an adhesive sheet. The porous polyethylene film is a non-adhesive film. A porous film was placed on each of facing surfaces of a porous polyacryl foam sheet and then pressed, thereby preparing a porous multilayer member. The porous polyethylene film did not have adhesiveness, and the surface of the porous multilayer member did not have adhesiveness. The thickness of the porous polyacryl foam sheet was 100 µm. The thickness of the porous polyethylene film was 7.7 µm. The air permeability of the porous polyethylene film was 178 sec/100 cc, and the porosity was 38%.

### (Manufacturing of solid electrolyte layer, in a dry method)

To Li₆PS₅Cl sulfide solid electrolyte (D₅₀ = 10 µm, crystalline), which is an argyrodite-type crystal, 1 part by weight of polytetrafluoroethylene (PTFE) first binder, and 1 part by weight of polyvinylidene fluoride (PVDF) second binder, based on 98 parts by weight of the solid electrolyte, were added in a grinder mixer and mixed to prepare a mixture. The prepared mixture was put in a mortar heated to 80 °C and stirred to prepare a dough. The prepared dough was passed through a roller and formed into a sheet to prepare a solid electrolyte film with a certain thickness. As such, a solid electrolyte layer was completely manufactured. Two solid electrolyte layers were prepared. The elastic modulus of the sulfide solid electrolyte was about 15 GPa to 30 GPa.

### (Preparation of anode layer)

A SUS sheet with a thickness of 10 µm was prepared as an anode current collector. In addition, as an anode active material, carbon black (CB) having a primary particle diameter of about 30 nm and silver (Ag) particles having an average particle diameter (D50) of about 60 nm were prepared.

4 g of a mixture powder prepared by mixing the carbon black (CB) and silver (Ag) particles at a weight ratio of 3:1 was put into a container, and 4 g of an NMP solution including about 7 weight% (wt%) of a PVDF binder (#9300 available from Kureha Co.) was added to the container to prepare a mixed solution. Next, while gradually adding NMP to the mixture solution, the mixed solution was stirred to prepare a slurry. The prepared slurry was applied to a SUS sheet using a bar coater, and dried in air at 80 °C for 10 minutes. The stack thus obtained was vacuum dried at 40 °C for 10 hours. The dried stack was cold roll pressed to planarize the surface of the first anode active material layer of the stack. As such, an anode layer was completely manufactured. The thickness of the first anode active material layer included in the anode layer was about 7 µm. The area of the first anode active material layer was the same as the area of the anode current collector. Two anode layers were prepared.

### (Preparation of cathode layer)

LiNi_{0.8}Co_{0.15}Mn_{0.05}O₂ (NCM) having Li₂O-ZrO₂ (LZO) coated thereon was prepared as a cathode active material. The LZO-coated cathode active material was prepared according to the method disclosed in Korean Patent Application Laid-Open No. 10-2016-0064942. Li₆PS₅Cl, which is an argyrodite type crystal, was prepared as a solid electrolyte (D50 = 0.5 µm, crystalline). A polytetrafluoroethylene (PTFE) binder was prepared as a binder. Carbon nanofibers (CNF) were prepared as a conducting agent. These materials were mixed with a xylene solvent in a weight ratio of cathode active material: solid electrolyte: conducting agent: binder = 84: 11.5: 3: 1.5 to form a sheet, and then vacuum-dried at 40 °C for 8 hours, thereby preparing a cathode sheet. The prepared cathode sheets were respectively disposed on both sides of a cathode current collector which was made of a carbon-coated aluminum foil, and a heated roll press was performed thereon at 85 °C to prepare a cathode layer. The total thickness of the cathode layer was about 220 µm. The thickness of each of the cathode active material layers was about 96 µm, respectively, and the thickness of the carbon-coated aluminum foil was about 28 µm. The area of the cathode active material layer was the same as the area of the cathode current collector.

### (Inactive member)

A slurry, in which cellulose fiber, glass fiber, aluminum hydroxide (Al(OH)₃), an acrylic binder, and a solvent were mixed, was molded into a gasket shape, and then a solvent was removed to prepare a flame retardant inactive member.

The weight ratio of cellulose fiber, glass fiber, aluminum hydroxide (Al(OH)₃), and the acrylic binder was 20:8:70:2. The thickness of the inactive member was 120 *µ*m. The prepared flame-retardant member was left at ambient temperature for 1 week and then used.

The inactive member was vacuum heat treated at 80 °C for 5 hours before being applied to an all solid secondary battery to remove moisture from the inactive member.

### (Preparation of all solid secondary battery)

Referring to FIG. 4, a solid electrolyte layer was disposed on an anode layer such that the first anode active material layer was in contact with the solid electrolyte layer. A flame-retardant inactive member was disposed on the solid electrolyte layer by thermal pressure to prepare two anode layer/solid electrolyte layer/inactive member stacks.

The inactive member was disposed on facing surfaces of the cathode layer such that the inactive member faces the cathode layer, to prepare an anode layer/solid electrolyte layer/cathode layer electrode assembly. The inactive member surrounds the side of the cathode layer and is in contact with the solid electrolyte layer. The inactive member was used as a gasket.

The cathode layer was placed in the center of the solid electrolyte layer, and a gasket surrounded the cathode layer and extended to the end of the solid electrolyte layer. The area of the cathode layer was about 90% of the area of the solid electrolyte layer, and the gasket was placed on a portion of the solid electrolyte layer in which the cathode layer is not disposed, which amounted to the remaining 10% of the area of the solid electrolyte layer. The solid electrolyte layer was disposed on the cathode layer and the gasket, and then the anode layer was disposed on the solid electrolyte layer, thereby preparing an electrode assembly.

The prepared anode layer/solid electrolyte layer/cathode layer electrode assembly was subjected to plate press treatment using a pressure of 500 MPa at 85 °C for 30 min. The solid electrolyte layer was sintered by the pressing process, and battery characteristics of the all solid secondary battery were improved. The thickness of one sintered solid electrolyte layer was about 45 µm. The area of the solid electrolyte layer was the same as that of the anode layer. The sintered electrode assembly was placed in a pouch and sealed to prepare a unit cell. A part of the cathode current collector and a part of the anode current collector were protruded to the outside of the sealed unit cell and used as a cathode layer terminal and anode layer terminal, respectively.

The electrode assembly stack was prepared by a magazine supply method in which 10 unit cells were arranged in the thickness direction, and 11 porous multilayer members were discontinuously arranged on both sides of each unit cell.

The area and shape of the porous multilayer member were the same as the area and shape of the unit cell the electrode assembly.

The electrode assembly stack was placed between two pressure plates, and the two pressure plates were screwed together to apply a certain pressure to facing surfaces of the electrode assembly stack.

### Example 2: PE (7.7 µm)/polyacrylic foam (50 µm)/PE (7.7 µm) porous multilayer member

An all solid secondary battery was prepared in the same manner as in Example 1, except that the thickness of the porous polyacryl foam sheet was changed to 50 µm.

### Example 3: PE (7.7 µm)/polyacrylic foam (30 µm)/PE (7.7 µm) porous multilayer member

An all solid secondary battery was manufactured in the same manner as in Example 1, except that the thickness of the porous polyacryl foam sheet was changed to 30 µm, and the supply method of the porous multilayer member was changed to a reel supply method.

The reel supply method is a method in which one porous multilayer member continuously extends, while bending multiple times in a zigzag form, among facing surfaces of each of 10 unit cells.

### Example 4: PE (7.7 µm)/polyacrylic foam (20 µm)/PE (7.7 µm) porous multilayer member

An all solid secondary battery was manufactured in the same manner as in Example 1, except that the thickness of the porous polyacryl foam sheet was changed to 20 µm, and the supply method of the porous multilayer member was changed to a reel supply method.

### Example 5: PE (7.7 µm)/polyacrylic foam (10 µm)/PE (7.7 µm) porous multilayer member

An all solid secondary battery was manufactured in the same manner as in Example 1, except that the thickness of the porous polyacryl foam sheet was changed to 10 µm, and the supply method of the porous multilayer member was changed to a reel supply method.

### Example 6: PE (5 µm)/polyacrylic foam (30 µm)/PE (5 µm) porous multilayer member

An all solid secondary battery was prepared in the same manner as in Example 1, except that the thickness of the porous polyacryl foam sheet was changed to 30 µm, the supply method of the porous multilayer member was changed to the reel supply method, the thickness of the porous polyethylene film was changed to 5 µm, and the air permeability was changed to 136 sec/100 cc, and the porosity was changed to 37%.

### Example 7: PE (5.4 µm)/polyacrylic foam (30 µm)/PE (5.4µm) porous multilayer member

An all solid secondary battery was prepared in the same manner as in Example 1, except that the thickness of the porous polyacryl foam sheet was changed to 30 µm, the supply method of the porous multilayer member was changed to the reel supply method, the thickness of the porous polyethylene film was changed to 5.4 µm, and the air permeability was changed to 64 sec/100 cc, and the porosity was changed to 44%.

### Example 8: PE (7.7 µm)/polyacrylic foam (100 µm)/PE (7.7 µm) porous multilayer member

An all solid secondary battery was prepared in the same manner as in Example 1 except that the supply method of the porous multilayer member was changed to the reel supply method.

### Example 9: PE (7.7 µm)/polyurethane foam (100 µm)/PE (7.7 µm) porous multilayer member

An all solid secondary battery was prepared in the same manner as in Example 1, except that the porous polyacryl foam sheet was changed to a porous polyurethane foam sheet, and the supply method of the porous multilayer member was changed to a reel supply method. The thickness of the porous polyurethane foam sheet was 100 µm.

### Comparative Example 1: PE (7.7 µm) porous monolayer member

An all solid secondary battery was prepared in the same manner as in Example 1, except that the porous multilayer member was changed to a porous polyethylene film monolayer member having a thickness of 7.7 µm, and the supply method of the porous multilayer member was changed to a reel supply method.

### Comparative Example 2: PP (11.4 µm) porous monolayer member

An all solid secondary battery was prepared in the same manner as in Example 1, except that the porous multilayer member was changed to a porous polypropylene film monolayer member having a thickness of 11.4 µm, and the supply method of the porous multilayer member was changed to a reel supply method.

### Comparative Example 3: PP(CCS) (15.4 µm) porous member

An all solid secondary battery was prepared in the same manner as in Example 1, except that the porous multilayer member was changed to a ceramic-coated porous polypropylene separator (CCS), and the supply method of the porous multilayer member was changed to a reel supply method. The thickness of the ceramic-coated porous polypropylene separator was 15.4 µm.

### Comparative Example 4: PP (MFS) (15.4 µm) porous member

An all solid secondary battery was prepared in the same manner as in Example 1, except that the porous multilayer member was changed to a ceramic-coated porous polypropylene separator (multi-functional separator, MFS), and the supply method of the porous multilayer member was changed to a reel supply method. The thickness of the ceramic-coated porous polypropylene separator was 15.4 µm.

### Comparative Example 5: Polyurethane foam sheet (100 µm) porous monolayer member

An all solid secondary battery was prepared in the same manner as in Example 1, except that the porous multilayer member was changed to a porous polyurethane foam sheet monolayer member having a thickness of 100 µm.

### Comparative Example 6: Polyacrylic foam sheet (100 µm) porous monolayer member

An all solid secondary battery was prepared in the same manner as in Example 1, except that the porous multilayer member was changed to a porous polyacryl foam sheet monolayer member having a thickness of 100 µm.

### Comparative Example 7: polytetrafluoroethylene foam sheet (100 µm) porous monolayer member

An all solid secondary battery was prepared in the same manner as in Example 1, except that the porous multilayer member was changed to a porous polytetrafluoroethylene foam sheet monolayer member having a thickness of 100 µm.

### Reference Example 1: free of inactive member

An all solid secondary battery was prepared in the same manner as in Example 1, except that an inactive member was not disposed around the cathode active material layer.

### Evaluation Example 1: Charging/discharging test

Charging/discharging characteristics of the all solid secondary batteries prepared according to Examples 1 to 9 and Comparative Examples 1 to 7 were evaluated by the following charging/discharging test. The charge/discharge test was performed by putting the all solid secondary batteries in a thermostat at a temperature of 45 °C.

In the first cycle, the batteries were charged with a constant current of 0.1 C until the battery voltage reached 4.25V, and when the battery voltage reached 4.25 V, constant voltage charging was performed at 4.25 V under a 0.05C cut-off condition. Next, discharging was performed at a constant current of 0.1 C until the battery voltage reached 2.5 V.

After the second cycle, charging and discharging were performed up to 250 cycles under the same conditions as in the first cycle. The increase in the number of cycles at the time of the short circuit refers to an improvement in lifespan characteristics.

The item "ease of stack manufacturing" is marked as X in the case where it was difficult to obtain a uniform alignment state because the adhesiveness porous member adhered to an electrode assembly during the stack manufacturing process, and the porous member was non-uniformly disposed between the electrode assemblies.

The item "ease of stack manufacturing" is marked as O in the case where it was easy to obtain a uniform alignment state because the non-sticky porous member was uniformly disposed between the electrode assemblies, and in the case where it was difficult to obtain dimensions.

The item "the relative speed of battery manufacturing" was evaluated relative to the time required for manufacturing an all solid secondary battery according to the method of stacking the electrode assembly and the porous member.

The higher the relative speed of battery manufacturing, the shorter the battery manufacturing time, and the slower the relative speed, the longer the battery manufacturing time.

The term "energy density" was classified according to the following criteria: ⊚ (a case where the energy density is excellent), ∘ (a case where the energy density is good), Δ (a case where the energy density is fair), and X (a case where the energy density is poor).

**[Table 1]**

| | Ease of stack manufacturing | Relative speed of battery manufacturing | Energy density | Time point when short circuit occurs [times] |
|---|---|---|---|---|
| Example 1 Magazine PE (7.7 µm)/Pοlyacrylic foam (100 µm)/PE (7.7 µm) | ○ | 6 | × | 200 |
| Example 2 Magazine PE (7.7 µm)/Polyacrylic foam (50 µm)/PE (7.7 µm) | ○ | 6 | Δ | 195 |
| Example 3 reel PE (7.7 µm)/Polyacrylic foam (30 µm)/PE (7.7 µm) | ○ | 8 | ○ | 160 |
| Example 4 reel PE (7.7 µm)/Polyacrylic foam (20 µm)/PE (7.7 µm) | ○ | 8 | ⊚ | 150 |
| Example 5 reel PE (7.7 µm)/Polyacrylic foam (10 µm)/PE (7.7 µm) | ○ | 8 | ⊚ | 130 |
| Example 6 reel PE (5 µm)/Polvacrylic foam (30 µm)/PE (5 µm) | ○ | 8 | ○ | 145 |
| Example 7 reel PE (5.4 µm)/Polyacrylic foam (30 µm)/PE (5.4 µm) | ○ | 8 | ○ | 120 |
| Example 8 reel PE (7.7 µm)/Polyacrylic foam (100 µm)/PE (7.7 µm) | ○ | 8 | ○ | 166 |
| Example 9 reel PE(7.7 µm)/Polyurethane foam (100 µm)/PE(7.7 µm) | ○ | 8 | ○ | 100 |
| Comparative Example 1 reel PE (7.7 µm) | ○ | 8 | ⊚ | 2 |
| Comparative Example 2 reel PP (11.4 µm) | ○ | 8 | ⊚ | 3 |
| Comparative Example 3 reel PP (CCS) (15.4 µm) | ○ | 8 | ⊚ | 10 |
| Comparative Example 4 reel PP (MFS) (15.4 µm) | ○ | 8 | ⊚ | 15 |
| Comparative Example 5 Magazine polyurethane foam (100 µm) | × | 3 | × | 150 |
| Comparative Example 6 Magazine Polyacrylic foam sheet (100 µm) | × | 2 | × | 200 |
| Comparative Example 7 Magazine PTFE Foam sheet (100µm) | × | 1 | × | 50 |

As shown in Table 1, the all solid secondary batteries of Examples 1 to 9 provided excellent characteristics in terms of ease of stack manufacturing, battery manufacturing speed, and lifespan.

The energy densities of the all solid secondary batteries of Examples 3 to 9 were also improved.

The all solid secondary batteries of Comparative Examples 1 to 4 did not include a porous cushioning layer. Accordingly, the lifespan characteristics thereof were poor.

The all solid secondary batteries of Comparative Examples 5 and 6 did not include a porous protecting layer. Accordingly, the ease of stack manufacturing, and the battery manufacturing speed were significantly poor.

The all solid secondary battery of Comparative Example 7 used a material with poor cushioning function. Accordingly, the processability and lifespan characteristics thereof were all poor.

The all solid secondary battery of Reference Example 1 did not include an inactive member gasket. Accordingly, although not disclosed in Table 1, the number of cycles at the time when the short circuit occurred was reduced compared to that of the all solid secondary battery of Example 1.

After the charging of the first cycle is completed in the all solid secondary batteries of Examples 1 to 9, SEM images of the cross-sections of the batteries were measured. As a result, it was confirmed that a lithium metal plated layer corresponding to the second anode active material layer between the first anode active material layer and the anode current collector was formed.

By way of summation and review, some lithium-ion batteries may use an electrolytic solution containing a flammable organic dispersion medium. Thus, when a short-circuit occurs, overheating and fire could occur. In response, all-solid batteries using a solid electrolyte instead of an electrolytic solution have been considered.

All-solid batteries may not use a flammable organic solvent. Accordingly, the possibility of overheating and fire may be greatly reduced even when a short-circuit occurs. Therefore, such all-solid batteries may greatly enhance safety as compared with lithium-ion batteries using an electrolytic solution.

As described above, the all solid secondary batteries related to present embodiments may be applied to various portable devices or vehicles.

According to one aspect, due to the placing of the porous multilayer member on the electrode assembly, the easiness of the manufacturing process of an all solid secondary battery may be improved, and due to the suppression of the short circuit of an all solid secondary battery, the lifespan characteristics thereof may be improved.

## Claims

1. An all solid secondary battery (1), comprising:
an electrode assembly (40) including a cathode layer (10), an anode layer (20), and a solid electrolyte layer (30) between the anode layer (20) and the cathode layer (10); and
a porous multilayer member (50) on one surface or opposite surfaces of the electrode assembly (40),
wherein the porous multilayer member (50) includes:
a porous cushioning layer (51), and
a porous protecting layer (52) on one surface or opposite surfaces of the porous cushioning layer (51).

2. The all solid secondary battery of claim 1, wherein the porous multilayer member (50) is on the anode layer (20).

3. The all solid secondary battery of claim 1 or 2, wherein an elastic modulus of the porous cushioning layer (51) is smaller than an elastic modulus of the porous protecting layer (52).

4. The all solid secondary battery of any one of the preceding claims, wherein:
a thickness of the porous cushioning layer (51) is greater than a thickness of the porous protecting layer (52), and
the porous cushioning layer (51) has a thickness of 1 µm to 200 µm, and an air permeability of 1,000 sec/100 cc or more according to JIS P8117.

5. The all solid secondary battery of any one of the preceding claims, wherein:
the porous cushioning layer (51) includes a porous foam, a porous sponge, or a combination thereof.

6. The all solid secondary battery of any one of the preceding claims, wherein:
the porous cushioning layer (51) includes a polymer material, a rubber material, or a combination thereof,
the polymer material includes a polyurethane polymer, a polyacryl polymer, a polystyrene polymer, a polyester polymer, a polyamide polymer, a polyolefin polymer, or a combination thereof, and
the rubber material includes natural rubber (NR), butadiene rubber (BR), nitrile rubber, silicone rubber, isoprene rubber (IR), styrene-butadiene rubber (SBR), isoprene-butadiene rubber, styrene-isoprene-butadiene rubber, acrylonitrile-butadiene rubber (NBR), ethylene-propylene-diene rubber, halogenated butyl rubber, halogenated isoprene rubber, halogenated isobutylene rubber, chloroprene rubber (CR), butyl rubber (IIR), halogenated isobutylene-p-methylstyrene rubber, or a combination thereof.

7. The all solid secondary battery of any one of the preceding claims, wherein the porous cushioning layer (51) is formed of an adhesive material and/or the porous protecting layer (52) is formed of a non-adhesive material.

8. The all solid secondary battery of any one of the preceding claims, wherein the porous protecting layer (52) has a thickness of 1 µm to 50 µm, an air permeability of 1,000 sec/100 cc or less measured according to JIS P8117, a porosity of 5 % to 95 % measured according to ASTM D-2873, and a pore size of 0.01 µm to 20 11m.

9. The all solid secondary battery of any one of the preceding claims, wherein the porous protecting layer (52) includes a polyolefin polymer, a cellulose polymer, or a combination thereof.

10. The all solid secondary battery of any one of the preceding claims, wherein:
the anode layer (20) includes an anode current collector (21) and a first anode active material layer (22) on the anode current collector (21),
the first anode active material layer (22) includes an anode active material and a binder, and
the anode active material includes at least one selected from a carbonaceous anode active material and a metal or metalloid anode active material,
the carbonaceous anode active material includes amorphous carbon, and
the metal or metalloid anode active material includes gold (Au), platinum (Pt), palladium (Pd), silicon (Si), silver (Ag), aluminum (Al), bismuth (Bi), tin (Sn), or zinc (Zn).

11. The all solid secondary battery as claimed in claim 10, further comprising a second anode active material layer between the anode current collector (21) and the first anode active material layer (22),
wherein:
the second anode active material layer is a metal layer containing lithium or a lithium alloy, and
the second anode active material layer is a plated layer.

12. The all solid secondary battery of any one of the preceding claims, wherein:
the cathode layer (10) includes a cathode current collector (11) and a first cathode active material layer (12a) and a second cathode active material layer (12b) respectively on opposite surfaces of the cathode current collector (11),
the solid electrolyte layer (30) includes a first solid electrolyte layer (30a) and a second solid electrolyte layer (30b) respectively in contact with the first cathode active material layer (12a) and the second cathode active material layer (12b),
the anode layer (20) includes a first anode layer (20a) and a second anode layer (20b) respectively in contact with the first solid electrolyte layer (30a) and the second solid electrolyte layer (30b),
the all solid secondary battery (1) further includes inactive member (60) surrounding a side surface of the cathode layer (10) and between the first solid electrolyte layer (30a) and the second solid electrolyte layer (30b), which face each other, and
an area of the porous multilayer member (50) is larger than an area of the first cathode active material layer (12a) or the second cathode active material layer (12b).

13. The all solid secondary battery of any one of the preceding claims, further comprising an electrode assembly stack (70) including:
a plurality of the electrode assemblies (40, 40a, 40b, 40c, and 40d) spaced apart from each other; and
at least one of the porous multilayer member (50) disposed among the plurality of electrode assemblies (40, 40a, 40b, 40c, and 40d),
wherein a thickness of the porous multilayer member (50) is smaller than a thickness of the electrode assemblies (40, 40a, 40b, 40c, and 40d).

14. The all solid secondary battery as claimed in claim 13, further comprising a pressure plate on facing surfaces of the electrode assembly stack (70),
wherein:
each of a plurality of the porous multilayer members is between adjacent electrode assemblies of the plurality of electrode assemblies, or
the porous multilayer member extends, while bending a plurality of times, among the plurality of electrode assemblies.

15. A method of manufacturing an all solid secondary battery (1), the method comprising:
providing an electrode assembly (40) including a cathode layer (10), an anode layer (20), and a solid electrolyte layer (30) between the anode layer (20) and the cathode layer (10), and
placing a porous multilayer member (50) on one surface or opposite surfaces of the electrode assembly (40),
wherein the porous multilayer member (50) includes:
a porous cushioning layer (51), and
a porous protecting layer (52) on one surface or opposite surfaces of the porous cushioning layer (51).
